(19)

Europäisches
Patentamt

European
Patent Office

Office européen
des brevets

(11)  EP 2 088 659 A1

## (12) EUROPEAN PATENT APPLICATION
published in accordance with Art. 153(4) EPC

(43) Date of publication:
**12.08.2009 Bulletin 2009/33**

(21) Application number: **07823013.3**

(22) Date of filing: **25.10.2007**

(51) Int Cl.:
*H02H 3/40* $^{(2006.01)}$    *H02H 3/08* $^{(2006.01)}$

(86) International application number:
**PCT/ES2007/000606**

(87) International publication number:
**WO 2008/049946 (02.05.2008 Gazette 2008/18)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **25.10.2006 ES 200602716**

(71) Applicant: **UNIVERSIDAD DEL PAIS VASCO- EUSKAL HERRIKO UNIBERSITATEA 48940 Leioa (Vizcaya) (ES)**

(72) Inventors:
• **URIONDO ARRUE, Felipe**
  **48940 Leioa (Bizkaia) (ES)**
• **HERNÁNDEZ GONZÁLEZ, José Ramón**
  **48940 Leioa (Bizkaia) (ES)**

(74) Representative: **Urizar Barandiaran, Miguel Angel Consultores Urizar y Cia, S.L. Gordoniz 22 5˚ 48012 Bilbao Vizcaya (ES)**

(54) **ELECTRIC LINE PROTECTION SYSTEM FOR DETERMINING THE DIRECTION IN WHICH A FAULT ARISES**

(57)    Electric line protection system to determine the direction in which a fault arises, which uses the inverse and homopolar sequence power which circulates through the point at which the unit is located and that consumed by the line to determine the direction in which the short-circuit is found. In order to do this, it calculates a scale value from the inverse and homopolar sequence voltages ($V_0$,$V_2$), intensities($I_0$,$I_2$), impedances ($Z_{L0}$,$Z_{L2}$) and the values adjusted by the user ($\alpha$, $\beta$) which is compared with two pre-set references ($K_F$, $K_R$), also set by the user, to determine the direction of the fault.

El scale value is calculated with the following expression:

$$\kappa = \mathrm{Re}\left\{ \frac{\alpha \cdot V_0 \cdot I_0^* + \beta \cdot V_2 \cdot I_2^*}{\alpha \cdot Z_{L0} \cdot \left| I_0 \right|^2 + \beta \cdot Z_{L2} \cdot \left| I_2 \right|^2} \right\}$$

The decision rule to determine the direction of the fault is:
• If $\kappa < K_F$ the fault has arisen in the front direction.
• If $\kappa > K_R$ the fault has arisen in the rear direction.

**Fig. 2**

EP 2 088 659 A1

**Description**

For a protection unit with the task of responding to short-circuits which occur in a specific electric line, it is essential to determine, when a short-circuit occurs, if it has taken place in the direction of the line it is covering (fault in front) or in the opposite direction (fault in rear).

The unit responsible for determining the direction in which the fault has arisen is commonly designated directional unit and plays a primary role in the quality of the protection unit it is a part of.

**STATE OF THE ART**

There are different types of directional units (21); (11) (documentation references) among the most popular are directional units polarized by inverse sequence tension and directional units polarized by homopolar sequence voltage. (13), (6) (documentation references). These units determine the direction in which the fault has arisen utilizing the existing time lag between the voltage and the intensity when a fault arises; for this, the following value is calculated:

$$\chi = -\text{Re}\left\{V \cdot I^* \cdot 1\angle -\theta_L\right\}$$

Where:

- V is the homopolar or inverse sequence voltage where the unit is installed.
- I* is the conjugate homopolar or inverse sequence intensity where the unit is installed.
- $\theta_L$ is the angle of the homopolar or inverse impedance of the line.

The decision rule to determine the direction of the fault is:

- If $\chi > 0$ the fault has arisen in the front direction.
- If $\chi < 0$ the fault has arisen in the rear direction.

These units have certain disadvantages when the end of the line on which they are installed is a strong end, or in other words, when the source impedance on that end is very small. In these cases, the sequence voltage is very small and working with small voltages causes a significant reduction of the sensitivity of the unit. In order to avoid this problem, the inverse and homopolar sequence impedance directional units (3), (5), (2), (1), (4) (documentation references) have been developed and patented. These units calculate the inverse or homopolar sequence impedance and compare it with pre-established values to determine the direction in which the fault has arisen. To do this, this expression is calculated:

$$\chi = \frac{\text{Re}\left\{V \cdot I^* \cdot 1\angle -\theta_L\right\}}{|I|^2}$$

Where:

- V is the homopolar or inverse sequence voltage
- I* is the conjugate homopolar or inverse sequence intensity
- $\theta_L$ is the angle of the homopolar or inverse impedance of the line

The decision rule to determine the direction of the fault is:

- If $\chi < Z_F$ the fault has arisen in the front direction.
- If $\chi > Z_R$ the fault has arisen in the rear direction.

Where $Z_F$ and $Z_R$ are adjustments defined by the user which depend on the impedances of the line which must protect the unit.

The most important limitation of the impedance units is that, in the case that the specific sequence on which they base their operation is not present in the short-circuit, they are not able to respond reliably. To overcome this problem, a unit has been designed which selects the most suitable between the inverse and homopolar sequence impedance directionals according to the magnitudes existing in point where the unit (1) (documentation reference) is installed. The problem is that this method can lead to selecting different polarizations on both ends of the line and, as seen in the bibliography, the use of different polarizations on both ends of the line, depending on the configuration of the network, leads to erroneous operations of the protection system (9) (documentation reference).

Therefore, the need still exists for a directional unit which includes the advantages of all the existing directional units and which, among other advances which will be specified later, is capable of responding adequately in total absence of voltages and intensities of inverse sequence or homopolar sequence and which is capable of responding adequately when it is included in a protection system which includes both ends of the line.

For this purpose, a new philosophy of directional unit has been developed which does not depend on polarization by voltage or by intensity or by the calculation of impedance, but in polarization by power which, using the inverse and homopolar sequence capacities which arise when a short-circuit arises, determines the direction in which the same has arisen.

This new polarization can be utilized, thanks to an unprecedented theory developed by the creators of this invention which proves that, when working with voltages or intensities, the ratios between sequences depend on the phase or phases between which the short-circuit has arisen as well as the type of fault, but that the ratios in power between the different sequences are totally general and independent of the aforementioned factors, which allows simultaneous work with all sequences simultaneously. Moreover, this theory quantifies and relates all types of power which arise when a short-circuit arises and because of this, it allows the utilization of all the sequences present in the fault simultaneously. The simultaneous- and not consecutive-use of the different sequences makes this new directional unit clearly superior to all previous approaches, in every sense.

As will be specified later on, the existing units, up to the present, can be considered specific cases of the new unit, and because of this, the new unit includes all the previous units and has a new set of properties which can only be obtained with it.

The most important documentation to know in detail the state of the art is that which we state as follows:

(1) U.S. Patent No. 5,808,845 - System for preventing sympathetic tripping in a Power System.

(2) EP 0 769 836 A2 - A Directional Element.

(3) U.S. Patent No. 5,349,490 - Negative sequence directional element for a relay useful in protecting power transmission lines.

(4) U.S. Patent No. 5,365,396 - Negative sequence directional element for a relay useful in protecting power transmission lines.

(5) CA 2 108 443 - Negative Sequence Directional Element For a Relay Useful In Protecting Power Transmission

(6) G.E. Alexander, Joe Mooney and William Tyska, Joe, "Advanced Application Guidelines for Ground Fault Protection", 28th Annual Western Protective Relay Conference, Spokane, WA, October 2002.

(7) Jeff Roberts, Demetrious Tziouvaras, Gabriel Benmouyal et al, "The effect of Multiprinciple Line Protection on Dependability and Security", Schweitzer Engineering Laboratories Technical Papers, Pullman, WA 2001.

(8) Bogdan Kasztenny, Dave Sharples, Bruce Campbell and Marzio Pozzuoli, "Fast Ground Directional Overcurrent Protection - Limitations and Solutions", 27th Annual Western Protective Relay Conference, Spokane, WA, October 2000.

(9) Elmo Price, "Sequence Coordination Study AN-55L-00", Substation Automation and Protection Division, ABB Application Note, March 2000.

(10) G. Benmouyal and J. Roberts, "Superimposed Quantities: Their True Nature and Their Application in Relays", 26th Annual Western Protective Relay Conference, Spokane, WA, October 1999.

(11) J.L. Blackburn, "Protective Relaying: Principles and Application", Second Edition, Marcel Dekker Inc. New York, 1998.

**EP 2 088 659 A1**

(12) Bill Fleming, "Negative Sequence Impedance Directional Element", Schweitzer Engineering Laboratories Technical Papers, Pullman, WA 1998.

(13) Joe Mooney and Jackie Peer, "Application Guidelines for Ground Fault Protection", 24th Annual Western Protective Relay Conference, Spokane, WA, October 1997.

(14) Jeff Roberts and Edmund O. Schweitzer III, "Limits to the Sensitivity of Ground Directional and Distance Protection", 1997 Spring Meeting of the Pennsylvania Electric Association Relay Committee, Allentown, Pennsylvania, May 1997.

(15) Armando Guzman, Jeff Roberts and Daquing Hou, "New Ground Directional Elements Operate Reliably For Changing System Conditions", 51st Annual Georgia Tech Protective Relaying Conference, Atlanta, Georgia, April 1997.

(16) P.M. Anderson, "Analysis of Faulted Power Systems", IEEE-Press - Power Engineering Series, 1995.

(17) P.G. McLaren, G.W. Swift et Al, "A New Directional Element for Numerical Distance Relays", IEEE-PES Summer Meeting, San Francisco, CA, July 28, 1994, Paper No. 94 SM 429-1 PWRD.

(18) Jeff Roberts and Armando Guzman, "Directional Element Design and Evaluation"; 21st Annual Western Protective Relay Conference, Spokane, WA, October 1994.

(19) Karl Zimmerman and Joe Mooney, "Comparing Ground Directional Element Performance Using Field Data", 20th Annual Western Protective Relay Conference, Spokane, WA, October 1993.

(20) G.E. Alexander and J.G. Andrichak, "Ground Distance Relaying: Problems and Principles", 19th Annual Western Protective Relay Conference, Spokane, WA, October 1991.

(21) IEEE Guide for Protective Relay Applications to Transmission Lines. IEEE standard, January 2000.

## DESCRIPTION OF THE INVENTION

### *Introduction*

The most advanced directional units are inverse impedance and homopolar impedance directional units which represent a significant improvement with respect to the traditional inverse sequence and homopolar sequence voltage polarized units.

Even so, these modem units are not capable of providing an adequate response when the voltages and intensities of the specific sequence on which they are based are very small or nil.

The new directional unit represents a new philosophy of directional unity which is not based on polarization by voltage or on the calculation of impedance, but on polarization by power which allows the creation of a single unit which embodies both the inverse sequence and the homopolar sequence directional functions, and due to this, is capable of surpassing all existing units to date.

### *Explanation of the invention*

It consists of a directional unit to be used in an Electric power System which, when a short-circuit arises, utilizes the inverse and homopolar sequence power which circulate through the point at which the unit is located and that consumed by the line to determine the direction in which the short-circuit is located. In order to do this, it calculates a scale value from the inverse and homopolar sequence voltages ($V_0$,$V_2$), intensities($I_0$,$I_2$), impedances ($Z_{L0}$,$Z_{L2}$) and the values set by the user ($\alpha$, $\beta$) which is compared with two pre-set references ($K_F$, $K_R$), also set by the user, to determine the direction of the fault.

The scale value is calculated by the following expression:

**4**

$$\kappa = \mathrm{Re}\left\{\frac{\alpha \cdot V_0 \cdot I_0^* + \beta \cdot V_2 \cdot I_2^*}{\alpha \cdot Z_{L0} \cdot \left|I_0\right|^2 + \beta \cdot Z_{L2} \cdot \left|I_2\right|^2}\right\}$$

La decision rule to determine the direction of the fault is:

- If $\kappa < K_F$ the fault has arisen in the front direction.
- If $\kappa > K_R$ the fault has arisen in the rear direction.

This invention presents a system of electric line protection to determine the direction in which a fault arises, which is characterized because it consists of a directional unit which receives the magnitudes of the electric line of homopolar sequence voltage ($V_0$), inverse sequence voltage ($V_2$), homopolar sequence intensity ($I_0$), inverse sequence intensity ($I_2$), the directional unit consisting of:

a) a supervision module with means to self-activate, totally or partially, only in short-circuit/fault situations;
b) a power calculator module which consists of means to
$b_1$) calculate the inverse sequence power ($S_2$) which circulates through the point at which the system is installed, in accordance with the expression:

$$S_2 = V_2 \cdot I_2^*$$

$I_2^*$ being the conjugate of the inverse sequence intensity ($I_2$);
$b_2$) calculating the inverse sequence power consumed by the entire line ($S_{L2}$), in accordance with the following expression:

$$S_{L2} = Z_{L2} \cdot \left|I_2\right|^2$$

$Z_{L2}$ being the impedance of the inverse sequence electric line;
$b_3$) calculating the homopolar sequence power ($S_0$) which circulates through the point at which the system is installed, in accordance with the expression:

$$S_0 = V_0 \cdot I_0^*$$

$I_0^*$ being the conjugate of the homopolar sequence intensity ($I_0$)
$b_4$) calculating the homopolar sequence power consumed by the entire line $S_{L0}$, in accordance with the following expression:

$$S_{L0} = Z_{L0} \cdot \left|I_0\right|^2$$

$Z_{L0}$ being the homopolar impedance of the electric line;
c) a decision module which consists of means to:
$c_1$) determine a polarization signal which responds to the expression:

$$S_{\mathrm{POLARIZACIÓN}} = \alpha \cdot S_{L0} + \beta \cdot S_{L2}$$

where $S_{L0}$ and $S_{L2}$ are the inverse and homopolar sequence powers and $\alpha$ and $\beta$ are values set by the user which reflect the percentage of each sequence to be used to minimize the possibility of incorrect operations;

$c_2$) to determine an operational signal which responds to the expression:

$$S_{\text{OPERACIÓN}} = \alpha \cdot S_0 + \beta \cdot S_2 - K \cdot S_{\text{POLARIZACIÓN}}$$

where $S_0$ and $S_2$ are the inverse and homopolar sequence powers and K is the border value chosen by the user, $K=K_F$ being for front faults and $K=K_R$ the border value for rear faults;

$c_3$) to determine the real part (Re) of the product of the operational signal by the conjugate of the polarization signal, in accordance with the expression:

$$\text{Re}\left(S_{\text{OPERACION}} \cdot S_{\text{POLARIZACION}}^{*}\right)$$

$c_4$) to decide that the direction of the fault has arisen "in front" of the system when the real part (Re) is negative and "in rear" when the real part is positive, which is formally expressed:

$$\text{Re}\left(\left(\alpha \cdot S_0 + \beta \cdot S_2 - K \cdot (\alpha \cdot S_{L0} + \beta \cdot S_{L2})\right)\left(\alpha \cdot S_{L0} + \beta \cdot S_{L2}\right)^{*}\right) \begin{array}{l} < 0 \rightarrow \text{Falta delante} \\ > 0 \rightarrow \text{Falta detrás} \end{array}$$

It is also characterized because deducting from $\text{Re}\left\{S_{OP} \cdot S_{POL}^{*}\right\} \leq 0$ the expression

$$\kappa = \text{Re}\left\{\frac{\alpha \cdot V_0 \cdot I_0^{*} + \beta \cdot V_2 \cdot I_2^{*}}{\alpha \cdot Z_{L0} \left|I_0\right|^2 + \beta \cdot Z_{L2} \left|I_2\right|^2}\right\} \leq K$$

and setting K as border value $K_F$ for faults in front and the border value $K_R$ for faults in rear, the decision module has directional means to decide that if:

$\kappa \leq K_F$ the fault has arisen in front direction
$\kappa \geq K_R$ the fault has arisen in rear direction

its corresponding outlet being activated.

It is also characterized because the system consists of counter circuits, one which counts the samples during which the "front" output is kept activated and another which counts the samples during which the "rear" output is kept activated, the output of the counter circuits being activated when the number samples accumulated is such that the time the response has been maintained is greater than that corresponding to pre-determined timing.

It is also characterized because it consists of a counter circuit which, for a pre-set time, blocks the activation of the output in "front" direction to not allow changes in flow due to the actions of associated switches of the system to bring about faulty performance of the unit.

It is also characterized because it consists of a signal adaptation module which consists of:

a) a circuit which determines the value of the voltage and the inverse sequence intensity from the voltages and intensities of the three phases of the line at the point where the directional unit is installed and whose relation to the phasors of those voltages and intensities of the phases R, S and T is given in the expression:

$$\{V_2 \quad I_2\} = \frac{1}{3}\begin{pmatrix}1 & 1\angle-120^\circ & 1\angle120^\circ\end{pmatrix}\begin{pmatrix}V_R & V_S & V_T \\ I_R & I_S & I_T\end{pmatrix}^T$$

b) a circuit which calculates the value of the voltage and the homopolar sequence intensity from voltages and intensities of the three phases of the line with the expression:

$$\{V_0 \quad I_0\} = \frac{1}{3}\begin{pmatrix}1 & 1 & 1\end{pmatrix}\begin{pmatrix}V_R & V_S & V_T \\ I_R & I_S & I_T\end{pmatrix}^T$$

It is also characterized because the module of supervision consists of three circuits:

a) A circuit whose output is activated if the mean-square value of the inverse sequence current, of the homopolar current, or that of both currents surpass a certain threshold pre-set by the user:

b) a circuit whose output is activated if the mean-square value of the inverse sequence current or of the homopolar sequence is superior to a specific percentage of the direct sequence current;

c) a circuit which is activated if the user has decided to utilize a directional mean, thus defining it in a system adjustment table and deciding that a directional mean is activated only when the outputs of said three circuits are simultaneously active.

This unit has the following improved characteristics as opposed to the existing units:

- It indicates the correct fault direction in total absence of intensities and voltages of homopolar or inverse sequence.
- It indicates the correct fault direction in total absence of voltages of either of the two sequences and even in total absence of both.
- It allows the selection of different proportions of homopolar and inverse sequence, which, in turn, facilitates:

  ○ the modification of the behaviour of the unit once installed.
  ○ Acting as a unit of homopolar sequence (if $\beta$=0) or of inverse sequence (if $\alpha$=0).
  ○ Obtaining an acceptable result in lines with mutual influence, reducing adequately the amount of homopolar sequence and the $K_F$ value.

- Its operation starts, both by surpassing the inverse sequence intensity threshold and the homopolar sequence intensity threshold; thus, its sensitivity is superior to any previous units.
- It can be used in schemes of teleprotection with no danger of occurrence of incorrect operations due to the use of different polarizations on both ends.
- The signal levels it uses are superior to all previous units, which in turn, allows:

  ○ Acceptance of greater errors in the magnitudes of input, maintaining the correct response.
  ○ Acting in a time shorter than the other the previous polarization units.

- A unique unit carries out the role of the homopolar sequence and the inverse sequence unit simultaneously, reducing the time and space necessary for the implementation of the unit in the protection unit.
- It can be coordinated in teleprotection schemes with any other protection, as, through modification of adjustments, it can act as a directional unit of any of the previous technologies, including the directional impedance units.
- Valid "universal adjustments" can be used for practically any situation which allows configuration errors to easily be detected.

***Brief description of the contents of the Figures***

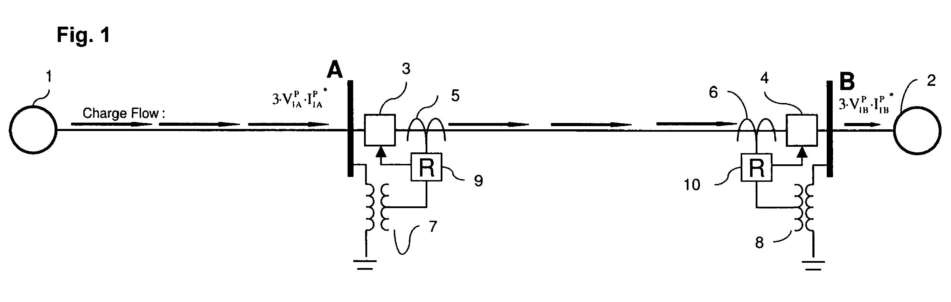

Shown in Figure 1 is an electric line of an electric power system. The electric line is located between the substations "A" and "B". In this figure the normal operational situation of the line is shown, with a charge circulating from one end to the other. The direction of the power circulation from one end to the other is fixed by the ends of the arrows. In this example, we have assumed that the charge, as seen in the figure, circulates from "A" to "B".

In Figure 2 the situation is presented which arises when the fault is in front of the protection. In the figure, it can be seen that the asymmetric short-circuit power (homopolar + inverse) flows from the short-circuit to the "A" end. That is, the protection sees this power incoming.

In Figure 3 the situation is presented which arises when the fault is behind the protection. In the figure, it can be seen that the asymmetric short-circuit power (homopolar + inverse) flows, as in the previous case, from the short-circuit to the "A" end. That is, the protection sees this power outgoing.

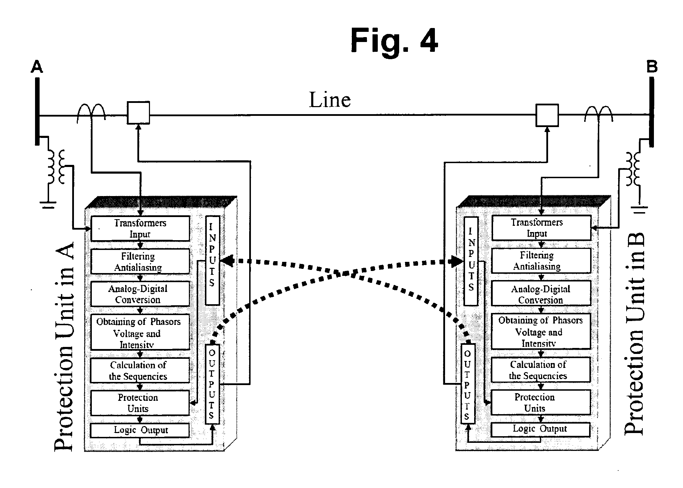

Shown in Figure 4 are the stages into which the performance of the protection unit are divided and the ratios with the measurement transformers and the switch in figures 1, 2 and 3.

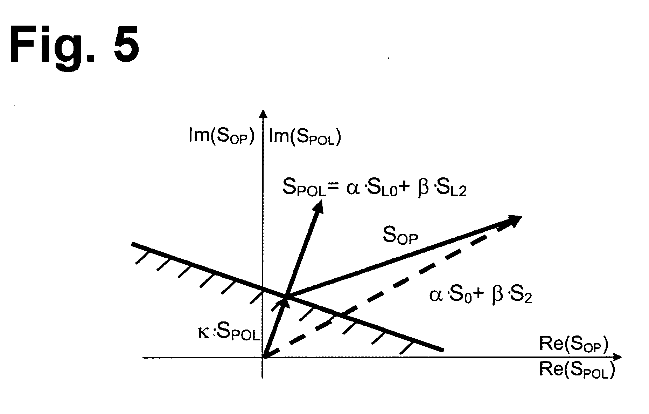

Shown in Figure 5 are the signals of polarization and operation of the new power-polarized comparator philosophy which the operation of the unit is based on when the fault arises "in rear" of the protection:

$$\mathrm{Re}\left(S_{OP} \cdot S_{POL}^{\bullet}\right)\big| > 0$$

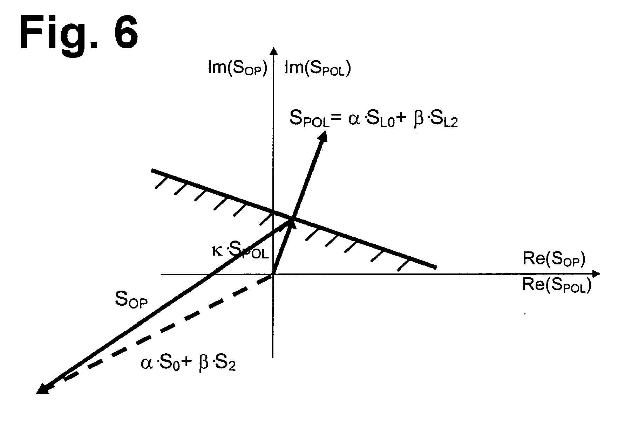

Shown in Figure 6 are the signals of polarization and operation of the new power-polarized comparator philosophy which the operation of the unit is based on when the fault arises "in front" of the protection:

$$\mathrm{Re}\left(S_{OP} \cdot S_{POL}^{\bullet}\right)\big| < 0$$

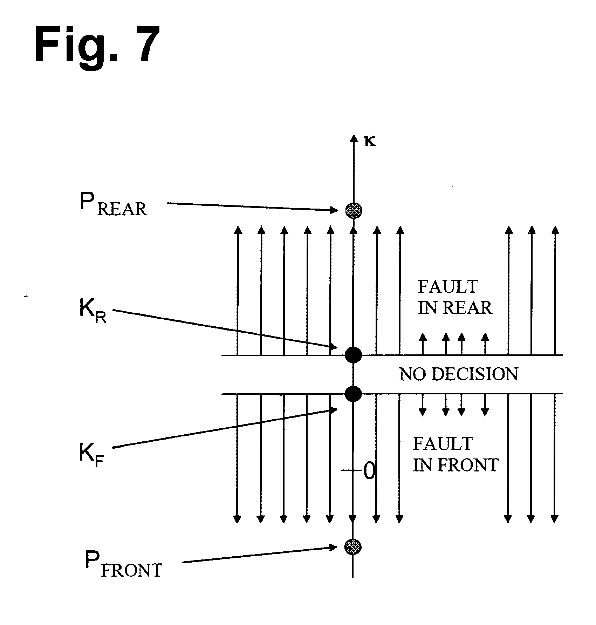

In Figure 7 three zones appear into which the response of the unit is divided according to the value of $\kappa$, $\kappa$ being the output of the new power-polarized comparator which is presented in this document:

$$\kappa = \mathrm{Re}\left\{\frac{\alpha \cdot V_0 \cdot I_0^{\bullet} + \beta \cdot V_2 \cdot I_2^{\bullet}}{\alpha \cdot Z_{L0} \cdot \left|I_0\right|^2 + \beta \cdot Z_{L2} \cdot \left|I_2\right|^2}\right\}$$

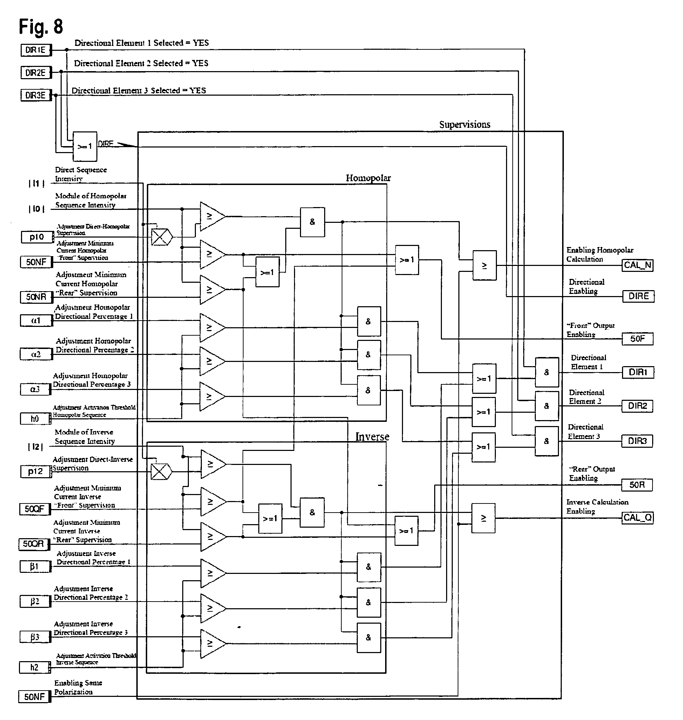

Shown in Figure 8 is the stage of supervisions of the unit, that is, the implementation of the supervisions which enable or place in operation each of the three directional elements making up the unit. In addition to the enabling of the three modules making up the unit, the supervisions which allow the activation of the definitive output of the comparator in a specific direction are included.

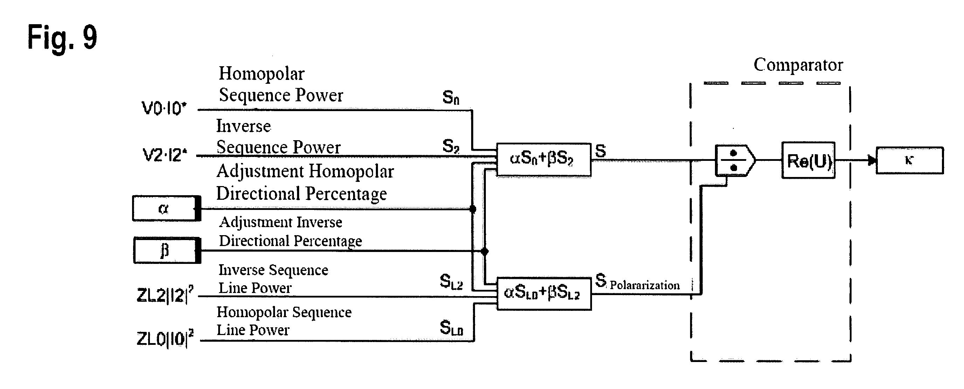

Shown in Figure 9 is the implementation of the new comparator, which includes de calculation of the homopolar and inverse sequence line power and that of the asymmetric power which passes through the point at which the protection is installed.

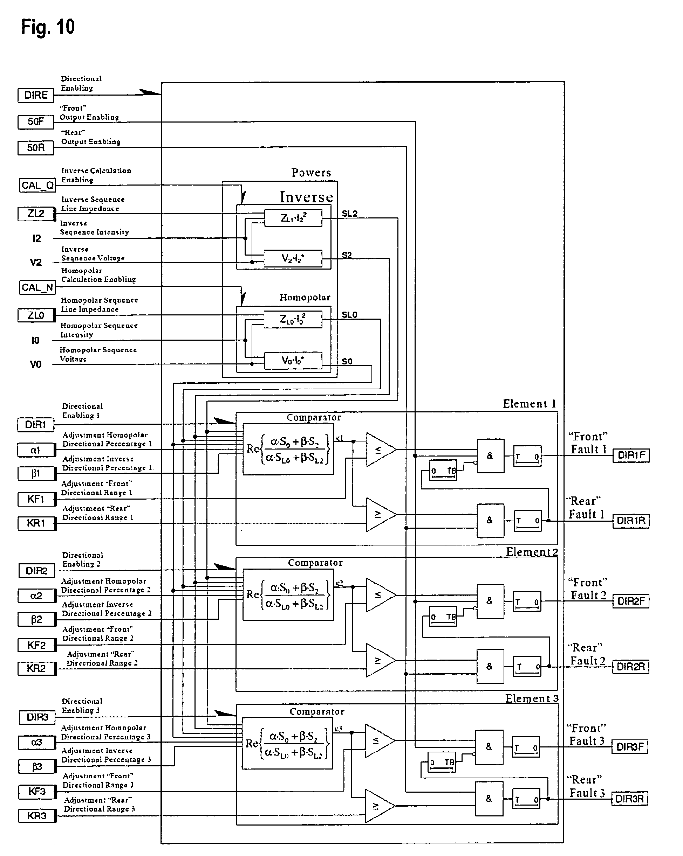

In Figure 10 three elements are shown which make up the unit. In this stage the calculations which determine the direction of the fault are made according to the enabling from the previous stage and from the adjustments defined by the user.

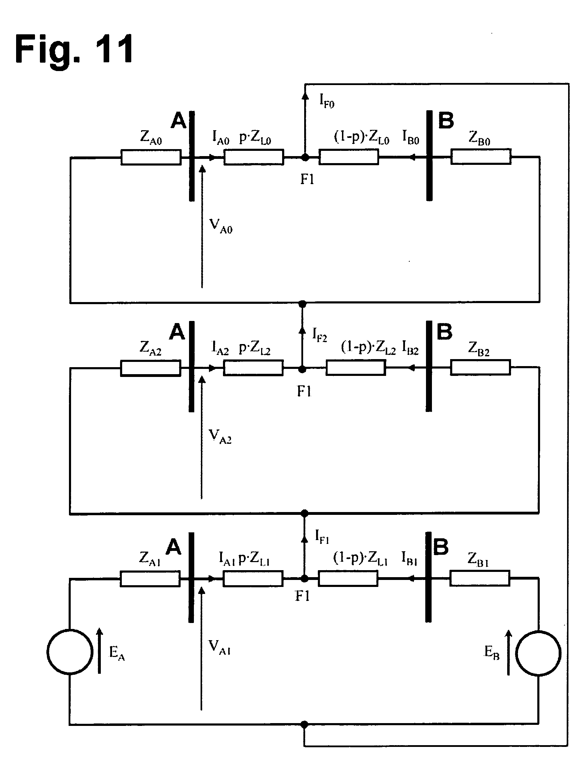

In Figure 11 the networks of direct, inverse and homopolar sequence are presented, connected in such a way that they reflect the existing ratios between voltages and intensities of the different sequences when a clear fault arises- that is, with nil fault resistance - in phase R for a "front" fault of the protection at a specific distance "p" (in a ratio of X: 1) of substation A.

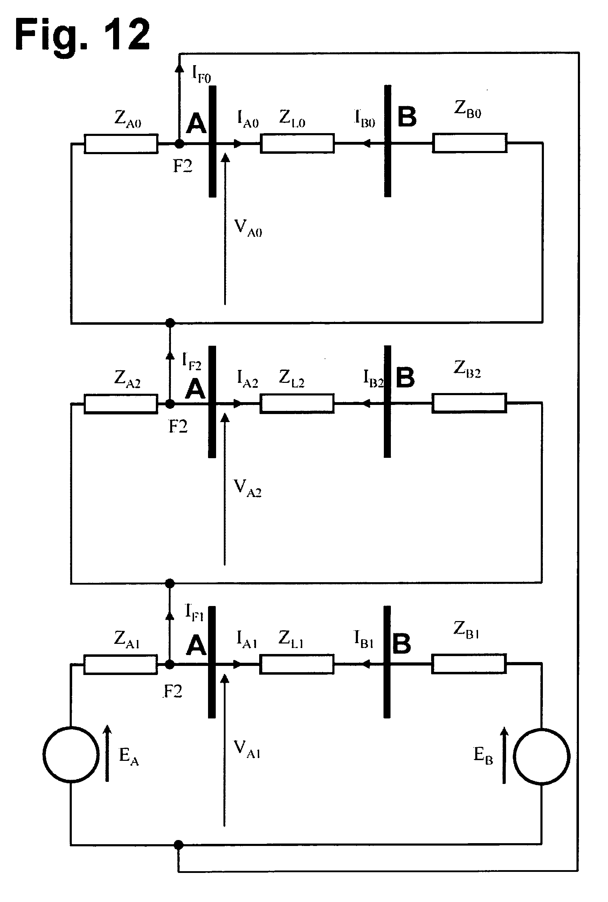

In Figure 12 are the networks of direct, inverse and homopolar sequence connected in such a way that they reflect the existing ratios between voltages and intensities of the different sequences when a clear fault arises-that is, with nil fault resistance- in phase R for a fault in a point immediately previous to that of the location of the protection.

### Detailed description of the invention

In Figure 1 two line protections (9) and (10) are shown which, through intensity-measurement transformers (5) and (6) and voltage measurement transformers (7) and (8), which reduce voltages and intensities to normalized low-voltage values, monitor the voltages and intensities of the line located between the substations A and B.

In Figure 4 the way in which the protections of both ends are shown from the voltages and intensities reduced to normalized values by the measuring transformers. These voltages and intensities are analogically filtered, eliminating the high-frequency components. The voltages and intensities filtered are sampled and, from these values, the voltage and intensity phasors are obtained which are used by the different protection units which, through the appropriate logic, activate the protection outputs which open or close the line switches.

Returning to Figure 1, in normal operating conditions the switches located on both ends of the line (3) and (4) are closed and the power which the line carries goes from one source (1) to the other (2) through it. The active and reactive power transported by the line can be calculated on each end through the expressions appearing in figure 1 corresponding to the normal situation.

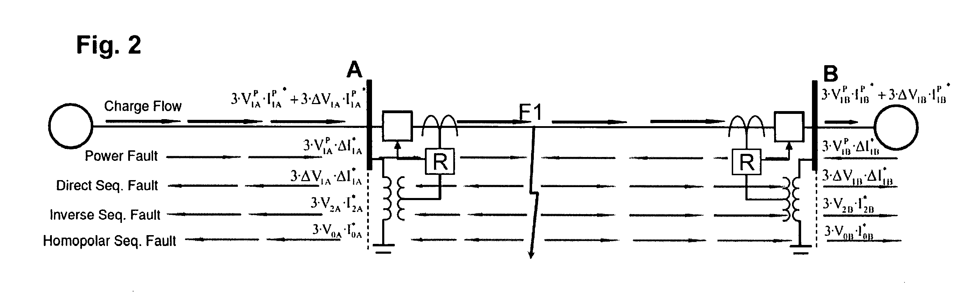

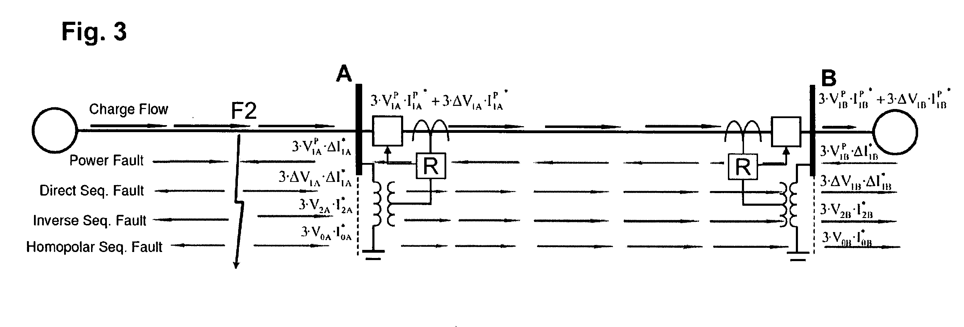

When a short-circuit arises -Figures 2 and 3- the protections of both ends (9) and (10) detect it and give the opening order to the switches (3) and (4) isolating the short-circuit. In a normal network the energy has alternate paths which allow the energy to continue circulating from A to B, ensuring continuity of service.

In general, the complex apparent power which circulates through a point of a three-phase line can be calculated from the voltages and intensities of the three phases (R, S and T) through the expression:

$$S_{TOTAL} = V_R \cdot I_R^* + V_S \cdot I_S^* + V_T \cdot I_T^*$$

The new theory about powers put in play in a short-circuit in a three-phase line shows that, when a short-circuit arises, the power can be expressed according to the voltages and intensities of three circuits called direct sequence network, inverse sequence network and homopolar sequence network through the expression:

$$S_{TOTAL} = 3 \cdot \left( V_1^P \cdot I_1^{P*} + \Delta V_1 \cdot I_1^{P*} + V_1^P \cdot \Delta I_1^* + \Delta V_1 \cdot \Delta I_1^* + V_2 \cdot I_2^* + V_0 \cdot I_0^* \right)$$

Where the meaning of the variables, all referring to the point where the unit is, is as follows:

- $V_1^P$ : direct sequence voltage before the short-circuit arises.

- $I_1^{P*}$ : conjugate direct sequence intensity before the short-circuit arises.

- $\Delta V_1$ : variation of the direct sequence voltage due to the short-circuit.

- $\Delta I_1^*$ : variation of the conjugate direct sequence intensity cue to the short-circuit.

- $V_2$: inverse sequence voltage during the short-circuit.

- $I_2^*$ : conjugate inverse sequence intensity.

- $V_0$: inverse sequence voltage during the short-circuit.

- $I_0^*$ : conjugate inverse sequence intensity.

And the physical meaning of the terms, in accordance with the new theory, is as follows:

- $V_1^P \cdot I_1^{P*}$ : flow of charge at the instant prior to the occurrence of the short-circuit.

- $\Delta V_1 \cdot I_1^{P*}$ : variation in the flow of charge due to the short-circuit.

- $\Delta V_1 \cdot \Delta I_1^*$ : power supplied by the source to the short-circuit.

- $\Delta V_1 \cdot \Delta I_1^* :$ direct sequence power returned by the short-circuit.

- $V_2 \cdot I_2^* :$ inverse sequence power returned by the short-circuit (S2).

- $V_0 \cdot I_0^* :$ homopolar sequence power returned by the short-circuit (S0).

The application of these expressions at each end of the line in fault situation brings about the situations described in Figure 2 for "Front Faults" and Figure 3 for "Rear Fault". If we compare both situations, we see that for the protection located at end B no difference is observed, as all the terms in which we can break down the power maintain their direction.

In this unit, only the terms of homopolar and inverse power have been used - that is, asymmetric power- because these only exist in a fault situation while the direct sequence is also present in the normal charge situation.

Analyzing Figures 2 and 3, it is observed that the asymmetric power always goes from the short-circuit towards the source. Therefore, when the fault arises "in front" of the protection, the asymmetric power circulates through it consumed by the source located behind the protection of end A. When the fault arises "in rear" of the protection, through it circulates the power consumed by the line which it is protecting and also the power consumed by the remote end B. Thanks to this, we can utilize the power consumed by the line as a reference, as it is only consumed when the fault has arisen "in rear" of the protection.

Moreover, working with powers allows us to overcome the impossibility of working with different sequences simultaneously, which exists when working with units which use voltage or impedance polarization.

As the unit presented uses asymmetric power, that is, the power of inverse sequence and of homopolar sequence, the expression of the power used will be:

$$S_{ASIMETRICA} = V_2 \cdot I_2^* + V_0 \cdot I_0^* = S_2 + S_0$$

In addition, the power consumed by an impedance of value Z can be calculated according to the intensity running through it by the expression:

$$S = Z \cdot I \cdot I^* = Z \cdot |I|^2$$

Therefore, if the asymmetric power consumed by the entire line had the inverse and homopolar sequence intensities running through it:

$$S_{LINEA} = Z_{L2} \cdot I_2 \cdot I_2^* + Z_{L0} \cdot I_0 \cdot I_0^* = S_{L2} + S_{L0}$$

Below, we define a new comparator philosophy which is based on polarization by power.. This sign of polarization is defined from the power consumed by the line as follows:

$$S_{POL} = \alpha \cdot Z_{L0} \cdot I_0 \cdot I_0^* + \beta \cdot Z_{L2} \cdot I_2 \cdot I_2^* = \alpha \cdot S_{L0} + \beta \cdot S_{L2}$$

where $\alpha$ and $\beta$ are the proportions of homopolar and inverse sequence respectively which we wish to use and whose selection is described later.

The operation signal is defined as follows:

$$S_{OP} = \alpha \cdot V_0 \cdot I_0^* + \beta \cdot V_2 \cdot I_2^* - \kappa \cdot S_{POL} = S - \kappa \cdot S_{POL}$$

The protections of both ends measure the same electrical magnitudes and work with the same operation and polarization signals, although the values of the magnitudes vary from one end to another.

The graphic representation of both signals is presented generically in Figure 5 for the two situations of interest. When the fault arises "in rear" -Figure 5- both signals are approximately in phase and when the fault arises "in front" -Figure 6- both are in counterphase. Due to this, the cosine of the angle formed by both signals will be positive when the fault arises "in rear" and negative when the fault arises "in front", as shown in Figures 5 and 6.

Due to this, a cosine comparator defined by the following expression allows us to determine the direction in which the fault has arisen:

$$\mathrm{Re}\!\left(S_{OP}\cdot S_{POL}^{*}\right)\!\begin{vmatrix} <0\rightarrow \text{Falta delante} \\ >0\rightarrow \text{Falta detrás} \end{vmatrix}$$

To determine the border for which the comparator stops giving positive output and gives a negative output, we must impose the condition that the output of the comparator is nil. At this point, the following is fulfilled:

$$\mathrm{Re}\!\left(S_{OP}\cdot S_{POL}^{*}\right)=0\rightarrow \mathrm{Re}\!\left((S-\kappa\cdot S_{POL})S_{POL}^{*}\right)=\mathrm{Re}\!\left(S\cdot S_{POL}^{*}\right)-\kappa\cdot\left|S_{POL}\right|^{2}=0\rightarrow \mathrm{Re}\!\left(S\cdot S_{POL}^{*}\right)=\kappa\cdot\left|S_{POL}\right|^{2}\rightarrow$$

$$\rightarrow \mathrm{Re}\!\left(\frac{S\cdot S_{POL}^{*}}{\left|S_{POL}\right|^{2}}\right)=\kappa\rightarrow \kappa=\mathrm{Re}\!\left\{\frac{S}{S_{POL}}\right\}=\mathrm{Re}\!\left\{\frac{\alpha\cdot V_{0}\cdot I_{0}^{*}+\beta\cdot V_{2}\cdot I_{2}^{*}}{\alpha\cdot Z_{L0}\cdot\left|I_{0}\right|^{2}+\beta\cdot Z_{L2}\cdot\left|I_{2}\right|^{2}}\right\}$$

The latter expression is much more suitable to be implemented numerically, thus, the unit will calculate the expression:

$$\kappa=\mathrm{Re}\!\left\{\frac{\alpha\cdot V_{0}\cdot I_{0}^{*}+\beta\cdot V_{2}\cdot I_{2}^{*}}{\alpha\cdot Z_{L0}\cdot\left|I_{0}\right|^{2}+\beta\cdot Z_{L2}\cdot\left|I_{2}\right|^{2}}\right\}=\mathrm{Re}\!\left\{\frac{\alpha\cdot S_{0}+\beta\cdot S_{2}}{\alpha\cdot S_{L0}+\beta\cdot S_{L2}}\right\}$$

The meanings of the terms of the expression are those explained previously. The value calculated by the expression is compared with two limit values as shown in Figure 7 and the direction of the fault is determined with the following decision rule:

- $\kappa<K_{F}$: the fault has arisen in "front" direction.
- $\kappa>K_{R}$: the fault has arisen in "rear" direction.
- $K_{F}<\kappa<K_{R}$: the unit does not give output; it is the "no decision" zone.

It can be shown that the expected value of $\kappa$ is, for single-phase faults:

- Fault to the front: $\quad \kappa=-\mathrm{Re}\!\left\{\frac{\alpha\cdot Z_{SA0}+\beta\cdot Z_{SA2}}{\alpha\cdot Z_{L0}+\beta\cdot Z_{L2}}\right\}=P_{DELANTE}$

- Fault to the rear: $\quad \kappa=\mathrm{Re}\!\left\{\frac{\alpha\cdot(Z_{L0}+Z_{SB0})+\beta\cdot(Z_{L2}+Z_{SB2})}{\alpha\cdot Z_{L0}+\beta\cdot Z_{L2}}\right\}=P_{DETRAS}$

And for two-phase faults:

• Fault to the front: $\kappa = -\mathrm{Re}\left\{\dfrac{Z_{SA2}}{Z_{L2}}\right\} = P_{DELANTE}$

• Fault to the rear: $\kappa = \mathrm{Re}\left\{\dfrac{Z_{L2} + Z_{SB2}}{Z_{L2}}\right\} = \mathrm{Re}\left\{1 + \dfrac{Z_{SB2}}{Z_{L2}}\right\} = P_{DETRAS}$

Where $Z_{A0}$, $Z_{A2}$, $Z_{B0}$ y $Z_{B2}$ are know in the art as source impedances of homopolar sequence and of inverse sequence of both line ends.

The unit is adjusted through the parameters $\alpha$, $\beta$, $K_F$ and $K_R$ set by the user. $\alpha$ and $\beta$ can be established with values contained in the interval [0,1]. A value "0" means that the sequence associated to that a value will not be used in the unit.; on the other hand, a value "1" means that the sequence affected will be fully used. The values of $K_F$ and $K_R$ fixed by the user must be fixed in the following open interval:

$$\left( \mathrm{M\acute{a}ximo}\left\{ -\frac{Z_{SA0}}{Z_{L0}}, -\frac{Z_{SA2}}{Z_{L2}} \right\}, \mathrm{M\acute{i}nimo}\left\{ \frac{Z_{L0} + Z_{SB0}}{Z_{L0}}, \frac{Z_{L2} + Z_{SB2}}{Z_{L2}} \right\} \right)$$

The previous interval fixes the theoretical limits for which the unit functions adequately in any situation but, except in extreme cases in which it could be best to get closer to the ends of the interval, the usual procedure will be to select values comprised in the interval [0,1]. Values which give good results in practically any situation are $K_F = 0.4$ and $K_R = 0.6$. To be able to make the same adjustments in practically any situation facilitates enormously the work of the person in charge of adjusting the protection, furthermore allowing rapid detection of modifications which can lead to dangerous situations, this being one of the advantages, and possibly not least in importance, of the new unit.

It has been taken into account that the unit can be used at three levels of complexity. The basic level is that of those users who wish to use the traditional directional units, that is, the voltage-polarized homopolar sequence and inverse sequence directional units. To obtain these units, we must, in fact, renounce all the advantages of this new directional unit. The inverse sequence voltage-polarized directional unit is obtained by fixing the parameters $\alpha=0$, $\beta=1$ and $K_F = K_R = 0$. For these values the unit is converted into:

$$\kappa = \mathrm{Re}\left\{ \frac{V_2 \cdot I_2^*}{Z_{L2}\left|I_2\right|^2} \right\} = \mathrm{Re}\left\{ \frac{V_2 \cdot I_2^*}{\left|Z_{L2}\right|\angle\theta_{L2}\cdot\left|I_2\right|^2} \right\} = \frac{\mathrm{Re}\left\{V_2 \cdot I_2^*\angle-\theta_{L2}\right\}}{\left|Z_{L2}\right|\left|I_2\right|^2}\begin{vmatrix} <0 \rightarrow \text{Falta delante} \\ >0 \rightarrow \text{Falta detrás} \end{vmatrix}$$

For the quotient to be nil, the numerator must be nil; it will therefore be true that:

$$-\mathrm{Re}\left\{V_2 \cdot I_2^*\angle-\theta_{L2}\right\}\begin{vmatrix} >0 \rightarrow \text{Falta delante} \\ <0 \rightarrow \text{Falta detrás} \end{vmatrix}$$

This coincides with the well-known expression of the inverse sequence voltage-polarized unit. Likewise, if the user wants a homopolar voltage-polarized directional unit, the adjustments that must be selected are $\alpha=1$, $\beta=0$ and $K_F = K_R = 0$. For these values the unit becomes:

$$-\mathrm{Re}\left\{V_0 \cdot I_0^*\angle-\theta_{L0}\right\}\begin{vmatrix} >0 \rightarrow \text{Falta delante} \\ <0 \rightarrow \text{Falta detrás} \end{vmatrix}$$

This coincides exactly with the expression which defines the homopolar voltage-polarized directional..

Users with intermediate-level knowledge who want to use inverse sequence impedance units must choose the adjustments: $\alpha=0$ and $\beta=1$. $K_F$ and $K_R$ must be between the values $P_{DELANTE}$ and $P_{DETRAS}$ $K_R$ being greater than $K_F$ so that there can be no ambiguity in the response. For these values the unit becomes:

$$\kappa = \mathrm{Re}\left\{\frac{V_2 \cdot I_2^*}{Z_{L2} \cdot |I_2|^2}\right\} = \mathrm{Re}\left\{\frac{V_2 \cdot I_2^*}{|Z_{L2}| \cdot 1\angle\theta_{L2} \cdot |I_2|^2}\right\} = \frac{\mathrm{Re}\left\{V_2 \cdot I_2^* \cdot 1\angle -\theta_{L2}\right\}}{|Z_{L2}||I_2|^2}$$

$$\chi = \kappa \cdot |Z_{L2}| = \frac{\mathrm{Re}\left\{V_2 \cdot I_2^* \cdot 1\angle -\theta_{L2}\right\}}{|I_2|^2} \begin{vmatrix} < Z_F \rightarrow \text{Falta delante} \\ > Z_R \rightarrow \text{Falta detrás} \end{vmatrix}$$

Therefore, the users who want to continue using impedance units only have to use the usual adjustment of the impedance units divided by the line impedance.

Likewise, the users who want to use homopolar impedance directional units must choose the adjustments: $\alpha=1$ and $\beta=0$. $K_F$ and $K_R$ must be between the values $P_{DELANTE}$ and $P_{DETRAS}$ $K_R$ being greater than $K_F$ so that there can be no ambiguity in the response. For these values the unit becomes:

$$\chi = \kappa \cdot |Z_{L0}| = \frac{\mathrm{Re}\left\{V_0 \cdot I_0^* \cdot 1\angle -\theta_{L0}\right\}}{|I_0|^2} \begin{vmatrix} < Z_F \rightarrow \text{Falta delante} \\ > Z_R \rightarrow \text{Falta detrás} \end{vmatrix}$$

This, effectively, is exactly equal to a homopolar sequence impedance directional unit.

Advanced users will use all the power of the unit, selecting the most suitable percentages of each sequence, depending on the type of line and their location in the network.

The directional unit is supplemented with other directional units for three-phase faults and a current-polarized one which uses well-known techniques in the art, which, because of this, have not been included.

The implementation of the unit is shown in Figures 8 and 10. The unit is made up of three modules which are presented in Figure 8, each of them being identical to the other two. All of them can be configured independently for the user to select the type of directional that is suitable for each application.

The user can use all the potentials of the unit in the three modules but any other alternative is also feasible. For example, he can configure the first module as an inverse sequence unit or as a homopolar sequence unit in case of having to coordinate the protection with another one which uses less advanced directional technologies that it - we should remember that it is best to use the same polarization in all ends - and configure the other two modules, exploiting all the virtues of the new unit.

Moreover, the use of this technology gives the user total freedom to select any type of protection to be coordinated with it, as through the modification of adjustments, it can be adjusted to any other directional philosophy pertaining to preceding generations.

The unit, to be activated, must surpass a series of supervisions which are included in Figure 8. Firstly, one of the three modules must be selected by the user (DIR1E or DIR2E or DIR3E).

For a module to be activated by inverse sequence, the mean-square value of the inverse sequence current ($|I2|$) must be greater than a specific proportion (p12) of the direct sequence ($|I1|$) to prevent the activation of the unit in three-phase faults. Moreover, the minimum established threshold of inverse sequence current must be surpassed for one of the directions (50QF and 50QR). This minimum threshold takes into account the circulation of inverse current in normal charge situation due to the asymmetries of the charge and the line. If said conditions are met and the user has decided to use this sequence ($\beta1>0$ or $\beta2>0$ or $\beta3>0$), then the module of the corresponding directional unit is enabled (DIR1 or DIR2 or DIR3). In the diagram, it is observed that the three independent blocks making up the unit are independently enabled so that only the modules in which all conditions are met are enabled.

Likewise, in order for a module to be activated by homopolar sequence, the mean-square value of the homopolar current ($|I0|$) must be greater than a threshold value which is a percentage (p10) of the direct sequence current. Moreover, it is necessary that the mean-square value of the homopolar current (|I0|) surpass the minimum thresholds for fault in front (50NF) or for fault in rear (50NR). Lastly, only if the user has selected the use of that sequence in the corresponding module ($\alpha$1>0 or $\alpha$2>0 or $\alpha$3>0) can the homopolar current activate the unit.

Moreover, the user can force the unit so that the polarization is constant or not, selecting it by an adjustment (MPE). Constant polarization will be selected in the case of teleprotection systems, or it may only allow the sequence/s to be taken into account that have caused the protection action. The latter is more advisable in systems which operate independently - - "stand alone" in the slang of the trade- or in situations where great asymmetries in the charge are possible. Fortunately, as systems with teleprotection are not used in points with great asymmetry of charges, there is practically always an optimal situation for each case.

When the unit activates, we enter Figure 10. The unit uses the outputs of the stage of supervisions (DIRE, 50F, 50Q, DIR1, DIR2 and DIR3, CAL_N, CAL_Q), the voltages and intensities of the inverse (V2 e I2) and homopolar (V0 e I0) sequences, the values of the adjustments set by the user ($\alpha$,$\beta$, KF and KR) and of the value of the line impedances (ZL2 and ZLO). Processing the information through the expression previously explained in depth calculates the value "$\kappa$" which is compared with the levels preset by the user (KF and KR) for the fault to be considered a fault which has arisen "in front" or "in rear". For the unit to definitively give output, an addition check is made, in which the established threshold must be enabled in order to begin to act for faults in the direction considered, that is, 50F for faults in front and 50Q for faults in rear. The direction in which the fault has arisen must be maintained for a pre-established time (T) to validate the output. The purpose of this last step is to prevent false firing, both due to transitory responses and due to errors in measurement.

## EXAMPLE OF REALIZATION OF THE INVENTION

To analyze the behaviour of the unit we begin with a system like the one shown in Figure 1 -whose equivalent circuit for "front" faults is shown in Figure 11 and for "rear" faults in Figure 12- where it is observed that the system considered is composed of a line with sources at both ends. The values, in secondary ohms, of the different elements making up the system are as follows:

| Element | Sequence | | |
| --- | --- | --- | --- |
| | **Direct ($\Omega$secondary)** | **Inverse ($\Omega$secondary)** | **Homop. ($\Omega$secondary)** |
| **Line** | $Z_{L1}$ = 0'414+4,273j | $Z_{L2}$ = 0'414+4'273j | $Z_{L0}$ = 4'244+14'417j |
| **End A** | $Z_{A1}$ = 0'0414+0'4273j | $Z_{A2}$ = 0'0414+0'4273j | $Z_{A0}$ = 0'4244+1'4417j |
| **End B** | $Z_{B1}$ = 0'414+4,273j | $Z_{B2}$ = 0'414+4'273j | $Z_{B0}$ = 4'244+14'417j |

The value of the sources at both ends of the line is $E_A$ = 67'78V$\angle$7'8° and $E_B$ = 70'85V$\angle$-5.4° respectively, measured in secondary volts.

This is to see, step by step, the process followed by the unit installed in end A covering the line in study.

Starting from Figure 8, we first activate the three elements which make up the unit through the adjustments DIR1E, DIR2E and DIR3E, which show that the user wishes to use the elements indicated. The logical value of these adjustments will be TRUE. Likewise, we select for it to work with the same polarization on both ends, that is, the logical value of MPE will also be TRUE.

As the unit presented, in addition to having its own distinctive characteristics, is able to replicate the responses of the directional units of preceding generations, we adjust each of the three elements making up the unit so that the first module simulates the performance of a homopolar sequence voltage-polarized directional unit; we adjust the second module to simulate an inverse sequence impedance unit. Lastly, we adjust the third module to act as a power-polarized unit with both inverse sequence and homopolar sequence components. This will allow us to see, in addition to its operation, the improvements that the third element presents with respect to the two first which replicate units based on comparators of preceding generations.

The specific adjustments of the three modules presented in Figure 10 are set at the following values:

| Module | Adjustments | | | | Behaviour of the Directional Unit |
| --- | --- | --- | --- | --- | --- |
| | $\alpha$ | $\beta$ | **$K_F$** | **$K_R$** | |
| 1 | 1 | 0 | 0 | 0 | Homopolar voltage-polarized |
| 2 | 0 | 1 | 0.4 | 0.6 | Of inverse sequence impedance |

(continued)

| Module | Adjustments | | | | Behaviour of the Directional Unit |
| --- | --- | --- | --- | --- | --- |
| | $\alpha$ | $\beta$ | $K_F$ | $K_R$ | |
| 3 | 1 | 1 | 0.4 | 0.6 | Power-polarized |

The values of the activation thresholds found in Figure 8 are adjusted according to the following table:

| Parameter | Adjustment | Parameter | Adjustment |
| --- | --- | --- | --- |
| 50QF | 0'5A | 50NF | 0'5A |
| 50QR | 0'5A | 50NR | 0'5A |

Let us suppose that a clear single-phase fault arises in phase R of the line at a point located on 95% of the length of the line. The voltages and intensities of the different sequences at the point where the unit is located (end A) are as follows:

| $V_{A0}$ | $V_{A1}$ | $V_{A2}$ | $I_{A0}$ | $I_{A1}$ | $I_{A2}$ |
| --- | --- | --- | --- | --- | --- |
| 4'1VL176° | 66'7VL7'1° | 1'2VL-172° | 2'7AL-76'7° | 3'2AL-42'1° | 2'7AL-76'7° |

It is observed that the intensities of the three sequences are of the same order of magnitude; thus, the supervisions which ensure that it is not an imbalance do not block the activation of the unit (p12 and p10 of Figure 8). In addition, the intensities are high enough to surpass the activation thresholds of the modules in both directions; thus, the signals enabling by intensity are activated (50QF, 50QR, 50NF y 50NR) as well as the enabling of the homopolar sequence (CAL_N) and inverse sequence (CAL_Q) calculations.

The enabling of the first element is done because the homopolar sequence current level is high enough. The inverse sequence does not enable element 1 because the value β1=0 blocks the inverse sequence (h2) signal.

The enabling of the second element, on the other hand, is realized because the inverse sequence current level is high enough, as the enabling by homopolar sequence (h0) is blocked, as the value of $\alpha$=0. The third element starts up because both the enabling of inverse and homopolar sequence meet the necessary conditions.

On meeting the foregoing conditions, the three modules of the unit will be enabled (DIR1, DIR2 and DIR3 of Figure 8, which are enabling inputs in Figure 10).

Passing to the second stage of the unit (Figure 10), each element, depending on its adjustments, will give a specific output. In the example we are analyzing, the values of input to the modules (SL2, S2, SL0 and S0 of Figure 10) will be as follows:

| $SL_2 = ZL2.|I2|^2$ | $S2 = V2\text{-}I2^*$ | $SL0=ZL0\cdot|I0|^2$ | $S0 = V0\cdot I0^*$ |
| --- | --- | --- | --- |
| (3'1 + 31'5j) VA | (-0'3-3'14j) VA | (31'2 + 106'lj) VA | (-3'12 - 10'61j) VA |

If we take into account the adjustments of each module, we will have the results seen in the following table:

| Module | Signals | | $\kappa$ | $K_F$ | $K_R$ | Behaviour of the Directional Module |
| --- | --- | --- | --- | --- | --- | --- |
| | $S = \alpha\cdot S0 + \beta\cdot S2$ | $S_{POL} = \alpha\cdot SL0 + \beta\cdot SL2$ | | | | |
| 1 | 11'1VAL-106'4° | 110'6VAL73'6° | -0'1 | 0 | 0 | Homopolar voltage polar. |
| 2 | 3'2VAL-93'5° | 31'6VAL83'5° | -0'1 | 0'4 | 0'6 | Inverse sequence Imped. |
| 3 | 14'2VAL-104° | 141'8VAL76° | -0'1 | 0'4 | 0'6 | Power-polarized |

If we analyze the response of the three elements which make up the directional, we will see that all of them give a correct response, as $K_F$-$\kappa$>0 ("Front Fault" is activated) and, however, $\kappa$-$K_R$<0 ("Rear Fault" is not activated). As the enabling 50F is active the "Front Fault" signal of the three elements is activated. Therefore, the three elements indicate that the direction in which the short-circuit has arisen is "in front". However, the quality of the response is not similar, as the response of the power-polarized element is much greater.

Firstly, if we compare the response of the tension-polarized element as compared to that of the power-polarized one, the latter is greater, because:

- The operation and polarization signals are stronger in the power element by approximately 30%, with the advantages that this provides.

- The value of $\kappa$ is -0'1 in both cases, but in the homopolar tension-polarized element this value is very near the border ($K_F$-$\kappa$ = 0'1) while in the power-polarized element $\kappa$ it is far from it ($K_F$-$\kappa$ = 0'5).

The conclusion is immediate, in this case, the errors in the input magnitudes which can be supported by the power-polarized directional maintaining as output the correct fault direction. These are several times greater than those which the homopolar voltage-polarized unit can support.

Secondly, if we compare the output of the new element with the inverse sequence impedance directional, again the power directional is clearly greater, as even when the distance with respect to the border is the same, for both units ($K_F$-$\kappa$ = 0'5), the operation and polarization signals are five times more powerful in the power-polarized unit, which means that the errors in the magnitudes of input supported by the new unit are several times greater than those supported by the impedance unit.

If the fault does not arise in front of the unit but rather at a point immediately before it, the circuit to resolve is the one presented in Figure 11. Applying any method of resolution of electrical circuits, we can determine the values of the voltages and intensities at the point where the unit is located. The values of the sequence magnitudes resulting from the calculation are as follows:

| $V_{A0}$ | $V_{A1}$ | $V_{A2}$ | $I_{A0}$ | $I_{A1}$ | $I_{A2}$ |
|---|---|---|---|---|---|
| 43'3V∟-176˚ | 55'6V∟5'5˚ | 12'4V∟-166˚ | 1'4A∟109˚ | 2'25A∟57'2˚ | 1'44A∟109˚ |

As in the previous case, the intensities of the three sequences are of the same order of magnitude; thus, the supervisions which ensure that the currents measured are not due to natural imbalances of the network (p12 and p10 of Figure 8) do not block the activation of the unit. Also in this case, the intensities are high enough to surpass the thresholds of activation of the units in both directions; thus, intensity-enabled (50QF, 50QR, 50NF y 50NR) and calculation (CAL_N y CAL_Q) signals are activated.

The enabling of the three elements is activated in identical manner to the previous case in which the fault had arisen "in front". The three modules of the unit will be enabled (DIR1, DIR2 and DIR3 of Figure 8) and, passing to the second stage of the unit (Figure 10), each element, according to its adjustments, will give a specific output. When the fault arises in the rear, the values of input to the modules (SL2, S2, SL0 and S0 of Figure 10) will be as follows:

| $SL2 = ZL2 \cdot |I2|^2$ | $S2 = V2 \cdot I2^*$ | $SL0 = ZL0 \cdot |I0|^2$ | $S0 = V0 \cdot I0^*$ |
|---|---|---|---|
| (0'9 + 8'9j) VA | (1'7 + 17'8j) VA | (8'8 + 30j) VA | (17'6 + 59'9j)) VA |

If we take into account the adjustments of each module, we will have the results seen in the following table:

| Module | Signals | | $\kappa$ | $K_F$ | $K_R$ | Behaviour of the Directional Module |
| | $S = \alpha \cdot S0 + \beta \cdot S2$ | $S_{POL} = \alpha \cdot SL0 + \beta \cdot SL2$ | | | | |
|---|---|---|---|---|---|---|
| 1 | 62'5VA∟73'6˚ | 31'23VA∟73'6˚ | 2 | 0 | 0 | Homopolar voltage polar. |
| 2 | 17'8VA∟84'5˚ | 8'9VA∟84'5˚ | 2 | 0'4 | 0'6 | Inverse sequence Impend. |
| 3 | 80'1VA∟76'1˚ | 40'0VA∟76'1˚ | 2 | 0'4 | 0'6 | Power-polarized |

In this case we see that the three elements indicate the same direction, the three indicating in "rear" direction as $\kappa$-$K_R$>0 ("Rear Fault" is indicated) and $K_F$-$\kappa$<0 ("Front Fault" is not activated). As the enabling 50R is active the "Rear Fault" signal of the three elements is activated. But as in the previous case, the reliability of the three responses is not the same.

The lower-power signals are those of the inverse sequence impedance unit and the margin of error up to the point at which inversion arises in the direction in that unit is $\kappa$-$K_R$ = 2 - 0'6 = 1'4, which is the same as the margin for the power-polarized element. The greatest margin of error in the output is that of the homopolar tension-polarized element ($\kappa$-$K_R$ = 2 - 0 = 2).

In this case the differences between the different principles are not as evident, as the greater magnitude of the signals in the power-polarized element is partially compensated by the fact that the acceptable margin of error in the output is greater in the case of the homopolar voltage-polarized unit. That greater margin of error is precisely what has made it possible for a minimal error in the front fault to cause an operational error in the homopolar voltage unit. The power-polarized unit, in this case, is only slightly greater, but weighing out both types of fault, the power-polarized unit is far superior.

**Claims**

1. Electric line protection system for determining the direction in which a fault arises, **characterized** because it consists of a directional unit which receives the magnitudes of the electric line of homopolar sequence voltage ($V_0$), inverse sequence voltage($V_2$), homopolar sequence intensity($I_0$), inverse sequence intensity ($I_2$), the directional unit consisting of:

   a) a supervision module with means for total or partial activation only in short-circuit/fault situations;
   b) a power-calculating module which consists of means for
   $b_1$) calculating the inverse sequence power ($S_2$) which circulates through the point at which the system is installed, according to the expression:

   $$S_2 = V_2 \cdot I_2^*$$

   $I_2^*$ being the conjugate of the inverse sequence intensity ($I_2$);
   $b_2$) calculating the inverse sequence power consumed by the entire line ($S_{L2}$), according to the following expression:

   $$S_{L2} = Z_{L2} \cdot |I_2|^2$$

   $Z_{L2}$ being the impedance of the inverse sequence electric line;
   $b_3$) calculating the homopolar sequence power ($S_0$) which circulates through the point at which the system is installed, according to the expression:

   $$S_0 = V_0 \cdot I_0^*$$

   $I_0^*$ being the conjugate of the homopolar sequence intensity ($I_0$)
   $b_4$) calculating the homopolar sequence power consumed by the entire line $S_{L0}$, according to the following expression:

   $$S_{L0} = Z_{L0} \cdot |I_0|^2$$

   $Z_{L0}$ being the homopolar impedance of the electric line;
   c) a decision module which consists of means for:
   $c_1$) determining a polarization signal which responds to the expression:

   $$S_{\text{POLARIZACIÓN}} = \alpha \cdot S_{L0} + \beta \cdot S_{L2}$$

where $S_{L0}$ and $S_{L2}$ are the inverse sequence and homopolar powers and $\alpha$ and $\beta$ are values fixed by the user which reflect the percentage of each sequence to be used for minimizing the probability of incorrect operations;

$c_2$) determining an operation signal which responds to the expression:

$$S_{OPERACIÓN} = \alpha \cdot S_0 + \beta \cdot S_2 - K \cdot S_{POLARIZACIÓN}$$

where $S_0$ and $S_2$ are the inverse sequence and homopolar powers and K is the border value chosen by the user, thus $K=K_F$ for front faults and $K=K_R$ the border value for rear faults;

$c_3$) determining the real part (Re) of the product of the operation signal through the conjugate of the polarization signal, according to the expression:

$$Re\left(S_{OPERACION} \cdot S^*_{POLARIZACION}\right)$$

$c_4$) deciding that the direction of the fault has arisen "in front" of the system when the real part (Re) is negative and "in rear" when the real part is positive, which is formally expressed:

$$Re\left((\alpha \cdot S_0 + \beta \cdot S_2 - K \cdot (\alpha \cdot S_{L0} + \beta \cdot S_{L2}))(\alpha \cdot S_{L0} + \beta \cdot S_{L2})^*\right)\begin{vmatrix} < 0 \to \text{Falta delante} \\ > 0 \to \text{Falta detrás} \end{vmatrix}$$

2. Electric line protection system for determining the direction in which a fault arises, according to the foregoing claim, **characterized** because deduced from $Re\left\{S_{OP} \cdot S^*_{POL}\right\} \leq 0$ the expression

$$\kappa = Re\left\{\frac{\alpha \cdot V_0 \cdot I_0^* + \beta \cdot V_2 \cdot I_2^*}{\alpha \cdot Z_{L0} \cdot |I_0|^2 + \beta \cdot Z_{L2} \cdot |I_2|^2}\right\} \leq K$$

and the K fixed as border value $K_F$ for front faults and the border value $K_R$ for rear faults, the decision module has directional means to decide that if:

$\kappa \leq K_F$ the fault has arisen in front direction
$\kappa \geq K_R$ the fault has arisen in rear direction

activating the corresponding output.

3. Electric line protection system to determine the direction in which a fault arises, according to foregoing claims, **characterized** because the system consists of counter circuits, one which counts the samples during which the output "to the front" is kept activated and another which counts the samples during which the output "to the rear" is kept activated, the output of the counter circuits being activated when the number of samples accumulated is such that the time during which the response has been maintained is greater than that corresponding to a predetermined temporization.

4. Electric line protection system to determine the direction in which a fault arises, according to claim 3, **characterized** because it consists of a counter circuit which, during a pre-set time, blocks the activation of the output in "front" direction to not allow flow changes due to actions of associate switches of the system to lead to improper actions of the unit.

5. Electric line protection system to determine the direction in which a fault arises, according to claim 1, **characterized** because it consists of a signal adaptation module which consists of:

a) a circuit which determines the value of the inverse sequence voltage and intensity from the voltages and intensities of the three phases of the line at the point where the directional unit is installed and whose ratio with the phasors of these voltages and intensities of phases R, S and T is given in the expression:

$$\{V_2 \quad I_2\} = \frac{1}{3}\begin{pmatrix} 1 & 1\angle -120° & 1\angle 120° \end{pmatrix}\begin{pmatrix} V_R & V_S & V_T \\ I_R & I_S & I_T \end{pmatrix}^T$$

b) a circuit which calculates the value of the homopolar sequence voltage and intensity from voltages and intensities of the three phases of the line with the expression:

$$\{V_0 \quad I_0\} = \frac{1}{3}\begin{pmatrix} 1 & 1 & 1 \end{pmatrix}\begin{pmatrix} V_R & V_S & V_T \\ I_R & I_S & I_T \end{pmatrix}^T$$

6. Electric line protection system to determine the direction in which a fault arises, according to claim 1, **characterized** because the module of supervision consists of three circuits:

a) A circuit whose output activates if the mean-square value of the inverse sequence current, of the homopolar current, or of both currents surpass a specific threshold pre-set by the user;
b) a circuit whose output activates if the mean-square value of the inverse sequence current or of the homopolar sequence is greater than a specific percentage of the direct sequence current;
c) a circuit which activates if the user has decided to use a directional means, defining it thus in a system adjustments table and deciding that a directional means activates only when the outputs of said three circuits are active simultaneously.

**Fig. 1**

$3 \cdot V_{1A}^{P} \cdot I_{1A}^{P*}$

$3 \cdot V_{1B}^{P} \cdot I_{1B}^{P*}$

A

B

Charge Flow :

R

R

EP 2 088 659 A1

**Fig. 2**

A        B

Charge Flow    $3 \cdot V_{1A}^{P} \cdot I_{1A}^{P}{}^{*} + 3 \cdot \Delta V_{1A} \cdot I_{1A}^{P}{}^{*}$    F1    $3 \cdot V_{1B}^{P} \cdot I_{1B}^{P}{}^{*} + 3 \cdot \Delta V_{1B} \cdot I_{1B}^{P}{}^{*}$

Power Fault    $3 \cdot V_{1A}^{P} \cdot \Delta I_{1A}^{*}$     R    R    $3 \cdot V_{1B}^{P} \cdot \Delta I_{1B}^{*}$

Direct Seq. Fault    $3 \cdot \Delta V_{1A} \cdot \Delta I_{1A}^{*}$     $3 \cdot \Delta V_{1B} \cdot \Delta I_{1B}^{*}$

Inverse Seq. Fault    $3 \cdot V_{2A} \cdot I_{2A}^{*}$     $3 \cdot V_{2B} \cdot I_{2B}^{*}$

Homopolar Seq. Fault    $3 \cdot V_{0A} \cdot I_{0A}^{*}$     $3 \cdot V_{0B} \cdot I_{0B}^{*}$

## Fig. 3

**A**

**B**

Charge Flow

F2

Power Fault

Direct Seq. Fault

Inverse Seq. Fault

Homopolar Seq. Fault

$3 \cdot V_{1A}^{P} \cdot I_{1A}^{P *} + 3 \cdot \Delta V_{1A} \cdot I_{1A}^{P *}$

$3 \cdot V_{1A}^{P} \cdot \Delta I_{1A}^{*}$

$3 \cdot \Delta V_{1A} \cdot \Delta I_{1A}^{*}$

$3 \cdot V_{2A} \cdot I_{2A}^{*}$

$3 \cdot V_{0A} \cdot I_{0A}^{*}$

$3 \cdot V_{1B}^{P} \cdot I_{1B}^{P *} + 3 \cdot \Delta V_{1B} \cdot I_{1B}^{P *}$

$3 \cdot V_{1B}^{P} \cdot \Delta I_{1B}^{*}$

$3 \cdot \Delta V_{1B} \cdot \Delta I_{1B}^{*}$

$3 \cdot V_{2B} \cdot I_{2B}^{*}$

$3 \cdot V_{0B} \cdot I_{0B}^{*}$

R

R

EP 2 088 659 A1

# Fig. 4

# Fig. 5

$$Im(S_{OP}) \quad Im(S_{POL})$$

$$S_{POL} = \alpha \cdot S_{L0} + \beta \cdot S_{L2}$$

$$S_{OP}$$

$$\alpha \cdot S_0 + \beta \cdot S_2$$

$$\kappa : S_{POL}$$

$$Re(S_{OP})$$

$$Re(S_{POL})$$

Fig. 6

# Fig. 7

## Fig. 8

## Fig. 9

Homopolar
Sequence Power                     $S_0$

VO·IO*

Inverse
Sequence Power                     $S_2$

V2·I2*

Adjustment Homopolar
Directional Percentage

$\alpha$

Adjustment Inverse
Directional Percentage

$\beta$

Inverse Sequence
Line Power                         $S_{L2}$

ZL2|I2|²

Homopolar Sequence
Line Power                         $S_{L0}$

ZL0|I0|²

$\alpha S_0 + \beta S_2$    S

$\alpha S_{L0} + \beta S_{L2}$   S Polararization

Comparator

Re(U)        κ

EP 2 088 659 A1

## Fig. 10

# Fig. 11

# Fig. 12

# INTERNATIONAL SEARCH REPORT

| | International application No. |
|---|---|
| | PCT/ ES 2007/000606 |

**A. CLASSIFICATION OF SUBJECT MATTER**

see extra sheet

According to International Patent Classification (IPC) or to both national classification and IPC

**B. FIELDS SEARCHED**

Minimum documentation searched (classification system followed by classification symbols)
H02H

Documentation searched other than minimum documentation to the extent that such documents are included in the fields searched

Electronic data base consulted during the international search (name of data base and, where practicable, search terms used)

CIBEPAT,EPODOC

**C. DOCUMENTS CONSIDERED TO BE RELEVANT**

| Category* | Citation of document, with indication, where appropriate, of the relevant passages | Relevant to claim No. |
|---|---|---|
| D,A | US 5808845 A (ROBERTS) 15.09.1998, column 1, line 10- column 2, line 22 | 1-6 |
| D,A | EP 0769836 A2 (SCHWEITZER ENGINEERING LAB INC) 23.04.1997, the whole document | 1-6 |
| A | US 6573726 B1 (Aguirre G. et al.) 03.06.2003, column 3, line 60- column 4, line 15 | 1-6 |
| A | GB 2012505 A (WESTINGHOUSE ELECTRIC CORP) 25.07.1979. page 1- page 2, line 46 | 1-6 |
| A | AGRASAR, M. URIONDO, F., HERNANDEZ, J.R. "A useful methodology for analyzing distance relays performance during simple and inter-circuit faults in multi-circuit lines". Transactions on Power delivery, vol 12, Issue 4 Oct 1997, ISSN 0885-8977 pages 1465-1467 | 1-6 |

☐ Further documents are listed in the continuation of Box C.     ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
|---|---|
| 31.January.2008     (31.01.2008) | (21/02/2008) |
| Name and mailing address of the ISA/ O.E.P.M. Paseo de la Castellana, 75 28071 Madrid, España. Facsimile No.  34 91 3495304 | Authorized officer          L. García Aparicio Telephone No. +34 91 349 30 57 |

Form PCT/ISA/210 (second sheet) (April 2007)

## INTERNATIONAL SEARCH REPORT
Information on patent family members

| | International application No. |
| --- | --- |
| | PCT/ ES 2007/000606 |

| Patent document cited in the search report | Publication date | Patent family member(s) | Publication date |
| --- | --- | --- | --- |
| US 5808845 A | 15.09.1998 | NONE | ------------ |
| EP 0769836 AB | 23.04.1997 | EP 19960307413 | 11.10.1996 |
| | | CN 1154586 A | 16.07.1997 |
| | | CN 1068145 C | 04.07.2001 |
| | | US 5694281 A | 02.12.1997 |
| | | EP 0932235 AB | 28.07.1999 |
| | | EP 19990302513 | 11.10.1996 |
| | | CN 1332506 A | 23.01.2002 |
| | | CN 1331290 C | 08.08.2007 |
| | | AT 223626 T | 15.09.2002 |
| | | AT 223117 T | 15.09.2002 |
| | | DE 69623350 D | 02.10.2002 |
| | | DK 932235 T | 07.10.2002 |
| | | DK 769836 T | 07.10.2002 |
| | | DE 69623406 D | 10.10.2002 |
| | | PT 932235 T | 29.11.2002 |
| | | PT 769836 T | 31.12.2002 |
| | | ES 2182458 T | 01.03.2003 |
| | | ES 2182954 T | 16.03.2003 |
| | | DE 69623350 T | 10.04.2003 |
| | | DE 69623406 T | 22.05.2003 |
| US 6573726 B | 03.06.2003 | WO 0184687 A | 08.11.2001 |
| | | CA 2409145 A | 08.11.2001 |
| | | AU 5746201 A | 12.11.2001 |
| | | EP 1279213 A | 29.01.2003 |
| | | EP 20010930976 | 30.04.2001 |
| | | BR 0110597 A | 09.09.2003 |
| | | CN 1441985 A | 10.09.2003 |
| | | MXPA 02011776 A | 06.10.2003 |
| | | ZA 200209058 A | 07.11.2003 |
| | | NZ 522555 A | 26.08.2005 |
| GB 2012505 AB | 25.07.1979 | DE 2900654 A | 19.07.1979 |
| | | JP 54097748 A | 02.08.1979 |
| | | BR 7900098 A | 07.08.1979 |
| | | FR 2414810 A | 10.08.1979 |
| | | SE 7900254 A | 14.09.1979 |
| | | ES 476633 A | 01.12.1979 |
| | | ZA 7900137 A | 27.12.1979 |
| | | MX 145530 A | 02.03.1982 |
| | | SE 436237 BC | 19.11.1984 |
| | | IT 1110058 B | 23.12.1985 |

Form PCT/ISA/210 (patent family annex) (April 2007)

INTERNATIONAL SEARCH REPORT

International application No.

PCT/ ES 2007/000606

CLASSIFICATION OF SUBJECT MATTER

*H02H 3/40* (2006.01)
*H02H 3/08* (2006.01)

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5808845 A
- EP 0769836 A2
- US 5349490 A
- US 5365396 A
- CA 2108443

### Non-patent literature cited in the description

- **G.E. Alexander ; Joe Mooney ; William Tyska, Joe.** Advanced Application Guidelines for Ground Fault Protection. *28th Annual Western Protective Relay Conference,* October 2002
- **Jeff Roberts ; Demetrious Tziouvaras ; Gabriel Benmouyal et al.** The effect of Multiprinciple Line Protection on Dependability and Security. *Schweitzer Engineering Laboratories Technical Papers,* 2001
- **Bogdan Kasztenny ; Dave Sharples ; Bruce Campbell ; Marzio Pozzuoli.** Fast Ground Directional Overcurrent Protection - Limitations and Solutions. *27th Annual Western Protective Relay Conference,* October 2000
- **Elmo Price.** Sequence Coordination Study AN-55L-00. *Substation Automation and Protection Division, ABB Application Note,* March 2000
- **G. Benmouyal ; J. Roberts.** Superimposed Quantities: Their True Nature and Their Application in Relays. *26th Annual Western Protective Relay Conference,* October 1999
- **J.L. Blackburn.** Protective Relaying: Principles and Application. Marcel Dekker Inc, 1998
- **Bill Fleming.** Negative Sequence Impedance Directional Element. *Schweitzer Engineering Laboratories Technical Papers,* 1998
- **Joe Mooney ; Jackie Peer.** Application Guidelines for Ground Fault Protection. *24th Annual Western Protective Relay Conference,* October 1997
- **Jeff Roberts ; Edmund O. Schweitzer III.** Limits to the Sensitivity of Ground Directional and Distance Protection. *1997 Spring Meeting of the Pennsylvania Electric Association Relay Committee,* May 1997
- **Armando Guzman ; Jeff Roberts ; Daquing Hou.** New Ground Directional Elements Operate Reliably For Changing System Conditions. *51st Annual Georgia Tech Protective Relaying Conference,* April 1997
- **P.M. Anderson.** Analysis of Faulted Power Systems. *IEEE-Press - Power Engineering Series,* 1995
- **P.G. McLaren ; G.W. Swift et al.** A New Directional Element for Numerical Distance Relays. *IEEE-PES Summer Meeting,* 28 July 1994
- **Jeff Roberts ; Armando Guzman.** Directional Element Design and Evaluation. *21st Annual Western Protective Relay Conference,* October 1994
- **Karl Zimmerman ; Joe Mooney.** Comparing Ground Directional Element Performance Using Field Data. *20th Annual Western Protective Relay Conference,* October 1993
- **G.E. Alexander ; J.G. Andrichak.** Ground Distance Relaying: Problems and Principles. *19th Annual Western Protective Relay Conference,* October 1991